# DEMANDE DE BREVET EUROPEEN

(11) **EP 4 485 811 A1**
(43) Date de publication de la demande: **01.01.2025**
(21) Numéro de dépôt: 24184218.6
(22) Date de dépôt: 25.06.2024
(51) Int. Cl.: H04B 7/0404, H04B 7/06

(54) **PROCEDE DE TRANSMISSION DE DONNEES DANS UN RESEAU DE COMMUNICATION CELLULAIRE**

(30) Priorité: 27.06.2023 FR 2306715
(71) Demandeur: SAGEMCOM BROADBAND SAS, 92270 Bois-Colombes (FR)
(72) Inventeur: DE GRAEVE, Frédéric, 92270 BOIS-COLOMBES (FR)
(74) Mandataire: Cabinet Le Guen Maillet

(57) **Abrégé**

Un dispositif terminal comporte une pluralité d'antennes en émission dont une combinaison est sélectionnée pour effectuer une transmission de données vers une station de base d'un réseau de communication cellulaire. En phase de test, pour chaque combinaison d'antennes en émission possible, le dispositif terminal émet (402) des données de test, et surveille (403) quelle incidence a chaque combinaison d'antennes en émission possible sur des paramétrisations réalisées par la station de base vis-à-vis du dispositif terminal dans le réseau de communication cellulaire. Le dispositif terminal en déduit une métrique de qualité de lien ascendant obtenue avec chaque combinaison d'antennes en émission. Alors, en phase de transmission nominale, la transmission de données est effectuée en activant (405) la combinaison d'antennes en émission qui a obtenu la meilleure métrique de qualité de lien ascendant en phase de test.

## Description

### DOMAINE TECHNIQUE

La présente invention concerne un procédé de transmission de données depuis un dispositif terminal vers une station de base dans un réseau de communication cellulaire. Plus particulièrement, la présente invention concerne une sélection de combinaison d'antennes en émission pour effectuer la transmission de données depuis le dispositif terminal vers la station de base.

### ETAT DE LA TECHNIQUE ANTERIEURE

Dans des systèmes de communication cellulaires, comme en 4G (« 4th Génération », en anglais) ou en 5G (« 5th Génération », en anglais), des dispositifs de communication comportent une pluralité d'antennes disponibles en réception et/ou une pluralité d'antennes disponibles en émission. Un sous-ensemble de ces antennes est alors choisi pour réaliser des communications entre les dispositifs de communication

Il est notamment connu, dans le cas d'un canal de communication symétrique, par exemple en DECT (« Digital Enhanced Cordless Télécommunications » en anglais), de mesurer un niveau du signal reçu d'un dispositif distant successivement sur plusieurs antennes, et de retenir l'antenne offrant le meilleur résultat comme antenne utilisée à la fois en réception et en émission pour la suite. Toutefois, une telle approche perd son efficacité en défaveur du transmetteur de plus faible puissance, dès lors que les puissances utilisées par les deux dispositifs distants sont très dissymétriques, ce qui est le cas dans des communications cellulaires entre une station de base et une station mobile (ou dispositif terminal). En effet, la station mobile transmet typiquement des signaux d'une puissance de quelques dizaines de milliwatts, alors que la station de base transmet typiquement des signaux d'une puissance de plusieurs watts.

Il est aussi connu, dans les réseaux de communication cellulaires, que la station de base reçoive, de la part des stations mobiles, des informations de qualité de lien descendant (« downlink » en anglais). La station de base est aussi capable de mesurer la qualité de lien ascendant (« uplink » en anglais). De ces informations reçues et de ces mesures effectuées, la station de base est capable d'effectuer une paramétrisation cellulaire, et notamment d'instruire les stations mobiles quant au schéma de modulation et de codage à utiliser, quant à la puissance de transmission à utiliser,...

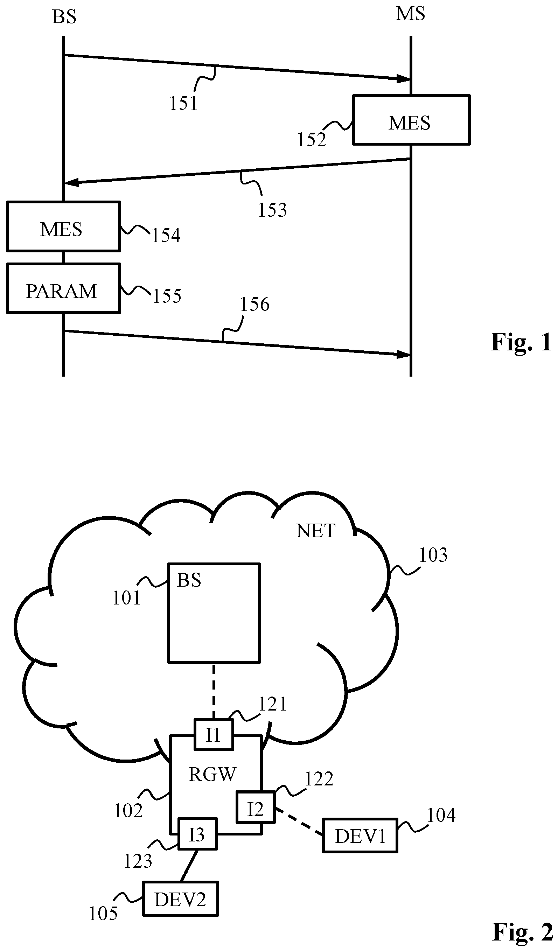

Cette situation est schématiquement représentée sur la Fig. 1, où dans une étape 151, une station de base BS transmet des données à une station mobile MS. Dans une étape 152, la station mobile MS effectue des mesures de qualité de lien descendant (niveau de signal, rapport signal à bruit, taux d'erreur de bloc...), et dans une étape 153, transmet des données à la station de base BS qui incluent des informations représentatives des mesures de qualité de lien descendant effectuées par la station mobile MS. En recevant les données transmises par la station mobile MS, la station de base BS effectue des mesures de qualité de lien ascendant (niveau de signal, rapport signal à bruit, taux d'erreur de bloc...), dans une étape 154. Alors, dans une étape 155, la station de base décide comment ajuster la paramétrisations de la station mobile MS pour améliorer la qualité de communication dans le réseau de communication cellulaire. Alors, dans une étape 156, la station de base BS transmet à la station mobile MS un message incluant des instructions quant au schéma de modulation et de codage à utiliser, quant à la puissance de transmission à utiliser,...

Toutefois, une telle approche n'est pas exploitable par la station mobile, car il n'existe pas de message pour obtenir de la station de base ses propres informations de conditions de réception, c'est-à-dire des informations de qualité de lien ascendant. De plus, du fait d'une forte dissymétrie des puissances d'émission en jeu entre la station de base et la station mobile, extrapoler des indicateurs de qualité de lien descendant pour estimer une qualité de lien ascendant n'est pas suffisamment précis pour discriminer l'efficacité de plusieurs combinaisons d'antennes.

D'autre part, une dissymétrie entre lien descendant (« downlink ») et ascendant (« uplink ») peut apparaître lorsque les bandes dans lesquelles ont lieu les émissions et réceptions respectives sont différentes. Cette dissymétrie peut se produire lorsque les protocoles 4G et/ou 5G utilisent une technologie radio d'accès à duplexage fréquentiel (Frequency Division Duplexing « FDD », en anglais).

Il est alors souhaitable de pallier ces inconvénients de l'état de la technique par une solution qui permette à une station mobile (ou dispositif terminal), de sélectionner une configuration d'antennes en émission à utiliser pour transmettre des données à la station de base, alors que la station de base ne fournit pas à la station mobile (ou dispositif terminal) d'information de qualité de signal reçu en provenance de la station mobile (ou dispositif terminal).

### EXPOSE DE L'INVENTION

Il est proposé ici un procédé de transmission de données depuis un dispositif terminal sur un lien ascendant vers une station de base d'un réseau de communication cellulaire, le dispositif terminal comportant une pluralité d'antennes en émission dont une combinaison est sélectionnée pour effectuer la transmission de données depuis le dispositif terminal vers la station de base, le procédé étant exécuté par le dispositif terminal. Le procédé comporte, en phase de test, pour chaque combinaison d'antennes en émission possible : émettre des données de test à destination de la station de base en activant la combinaison d'antennes en émission en question, et ; surveiller quelle incidence a la combinaison d'antennes en émission en question sur des paramétrisations réalisées par la station de base vis-à-vis du dispositif terminal dans le réseau de communication cellulaire, et en déduire une métrique de qualité de lien ascendant obtenue avec la combinaison d'antennes en émission en question. De plus, le procédé comporte, en phase de transmission nominale : effectuer la transmission de données en activant la combinaison d'antennes en émission qui a obtenu la meilleure métrique de qualité de lien ascendant en phase de test. L'incidence sur les paramétrisations réalisées par la station de base est surveillée en collectant à intervalle régulier une valeur instantanée de taille de bloc de transfert auprès d'une couche physique d'une interface de communication du dispositif terminal avec le réseau de communication cellulaire. La métrique est telle que plus la taille de bloc de transfert est élevée, meilleure est la qualité de lien ascendant.

Ainsi, grâce à la surveillance de l'incidence des combinaisons d'antennes en émission testées sur les paramétrisations réalisées par la station de base vis-à-vis du dispositif terminal dans le réseau de communication cellulaire, il est possible de sélectionner une configuration d'antennes en émission adéquate pour transmettre des données à la station de base, alors que la station de base ne fournit pas au dispositif terminal d'information de qualité de signal reçu en provenance du dispositif terminal.

Selon un mode de réalisation particulier, l'incidence sur les paramétrisations réalisées par la station de base est surveillée en utilisant en outre le schéma de modulation et de codage défini par la station de base pour le dispositif terminal, et la métrique est telle que plus le schéma de modulation et de codage est robuste, moins bonne est la qualité de lien ascendant.

Selon un mode de réalisation particulier, l'incidence sur les paramétrisations réalisées par la station de base est surveillée en outre en utilisant en outre un nombre de couches MIMO (« Multiple Inputs - Multiple Outputs » en anglais) autorisé par la station de base, et la métrique est telle que plus le nombre de couches MIMO est élevé, meilleure est la qualité de lien ascendant.

Selon un mode de réalisation particulier, l'incidence sur les paramétrisations réalisées par la station de base est surveillée en utilisant en outre une valeur de contrôle de puissance d'émission envoyée par la station de base au dispositif terminal, et la métrique est telle que plus la puissance d'émission est basse, meilleure est la qualité du lien ascendant.

Selon un mode de réalisation particulier, le procédé comporte : retenir uniquement la meilleure métrique de qualité de lien ascendant obtenue par itération de phase de test pour chaque combinaison d'antennes en émission testée.

Selon un mode de réalisation particulier, le procédé comporte : réaliser plusieurs itérations de phase de test, et calculer une métrique moyenne sur lesdites itérations, pour chaque combinaison d'antennes en émission testée.

Selon un mode de réalisation particulier, le procédé comporte : accumuler des statistiques sur une période T supérieure ou égale à un seuil prédéfini de durée TH1, sous forme d'un historique d'au moins une métrique de qualité de lien ascendant obtenue pendant des itérations successives de la phase de test ; et, retirer de l'historique les valeurs de métriques qui s'écartent de leur moyenne au-delà d'un seuil prédéfini de distance TH2.

Selon un mode de réalisation particulier, le seuil prédéfini de distance TH2 est égal à deux fois l'écart-type.

Selon un mode de réalisation particulier, le seuil prédéfini de durée TH1 est égal à quelques jours glissants.

Selon un mode de réalisation particulier, la phase de test est déclenchée sur détection d'un déplacement du dispositif terminal grâce à des mesures d'un accéléromètre monté solidaire au dispositif terminal.

Selon un mode de réalisation particulier, le dispositif terminal est une passerelle résidentielle.

Il est aussi proposé un dispositif terminal (tel qu'une passerelle résidentielle) configuré pour réaliser une transmission de données sur un lien ascendant vers une station de base d'un réseau de communication cellulaire, le dispositif terminal comportant une pluralité d'antennes en émission dont une combinaison est sélectionnée pour effectuer la transmission de données depuis le dispositif terminal vers la station de base. Le dispositif terminal comporte de la circuiterie électronique configurée pour, en phase de test, pour chaque combinaison d'antennes en émission possible : émettre des données de test à destination de la station de base en activant la combinaison d'antennes en émission en question, et ; surveiller quelle incidence a la combinaison d'antennes en émission en question sur des paramétrisations réalisées par la station de base vis-à-vis du dispositif terminal dans le réseau de communication cellulaire, et en déduire une métrique de qualité de lien ascendant obtenue avec la combinaison d'antennes en émission en question. De plus, la circuiterie électronique est configurée pour, en phase de transmission nominale : effectuer la transmission de données en activant la combinaison d'antennes en émission qui a obtenu la meilleure métrique de qualité de lien ascendant en phase de test. La circuiterie électronique est configurée pour que l'incidence sur les paramétrisations réalisées par la station de base soit surveillée en collectant à intervalle régulier une valeur instantanée de taille de bloc de transfert auprès d'une couche physique d'une interface de communication du dispositif terminal avec le réseau de communication cellulaire, la métrique étant telle que plus la taille de bloc de transfert est élevée, meilleure est la qualité de lien ascendant.

Il est aussi proposé ici un programme d'ordinateur comportant des instructions de code de programme causant une implémentation du procédé exposé ci-dessus dans l'un quelconque de ses modes de réalisation, lorsque lesdites instructions sont exécutées par un processeur de compteur intelligent. Il est aussi proposé ici un support de stockage d'informations stockant de telles instructions de code de programme.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement des échanges entre une station de base et une station mobile, selon l'état de la technique ;
[Fig. 2] illustre schématiquement un système de communication dans lequel un ou des modes de réalisation peuvent être implémentés ;
[Fig. 3] illustre schématiquement un agencement d'interface de communication adaptée à un réseau de communication cellulaire ;
[Fig. 4] illustre schématiquement un algorithme de configuration de l'interface de communication de la Fig. 3, par exécution d'une phase de test ;
[Fig. 5] illustre schématiquement un algorithme de déclenchement régulier de la phase de test ; et
[Fig. 6] illustre schématiquement un exemple d'agencement matériel d'un configurateur de l'interface de communication de la Fig. 3.

### EXPOSE DETAILLE DE MODES DE REALISATION

La Fig. 2 illustre schématiquement un système de communication dans lequel un ou des modes de réalisation peuvent être implémentés.

Le système de communication comporte un réseau de communication cellulaire NET 103, avec une station de base BS 101. Le réseau de communication cellulaire NET 103 est un réseau de téléphonie cellulaire, par exemple de type 4G ou 5G. Selon la technologie du réseau de communication cellulaire NET 103, la station de base BS 101 peut être communément désignée sous un autre terme, par exemple « eNodeB ». Le réseau de communication cellulaire NET 103 opérant selon le standard 4G et/ou 5G peut également être configuré pour des méthodes de transmission à duplexage fréquentiel (FDD) ou à duplexage temporel (Time Division Duplexing « TDD », en anglais).

Le système de communication comporte un dispositif terminal 102, aussi appelé « station mobile » ou « équipement utilisateur » (UE, pour « User Equipment » en anglais).

Dans un mode de réalisation préféré, le dispositif terminal 102 est une passerelle résidentielle RGW (« Residential GateWay » en anglais). Un tel agencement a la particularité que le canal de communication entre la station de base BS 101 et la passerelle résidentielle RGW 102 est plus stable que dans le cas où le dispositif terminal 102 est vouée à être fréquemment déplacée (comme le serait un téléphone mobile, par exemple).

La passerelle résidentielle RGW 102 comporte une interface de communication I1 121 permettant à la passerelle résidentielle RGW 102 de communiquer, en sans-fil, avec la station de base BS 101 dans le cadre du réseau de communication cellulaire NET 103.

La passerelle résidentielle RGW 102 comporte, de manière illustrative, une interface de communication I2 122 permettant de communiquer, en sans-fil, avec un ou plusieurs dispositifs terminaux DEV1 104. Par exemple, l'interface de communication I2 122 est de type Wi-Fi, et le dispositif terminal DEV1 104 est un décodeur TV, une tablette, un ordinateur....

La passerelle résidentielle RGW 102 comporte, de manière illustrative, une interface de communication I3 123 permettant de communiquer, de manière filaire, avec un ou plusieurs dispositifs terminaux DEV2 105. Par exemple, l'interface de communication I3 123 est de type Ethernet, et le dispositif terminal DEV2 105 est un décodeur TV, un ordinateur...

Ainsi, la passerelle résidentielle RGW 102 implémente des fonctionnalités de routeur permettant au dispositifs terminaux DEV1 104 et DEV2 105 d'accéder à des services de réseau étendu WAN (« Wide Area Network » en anglais), tels que des services Internet, via le réseau de communication cellulaire NET 103.

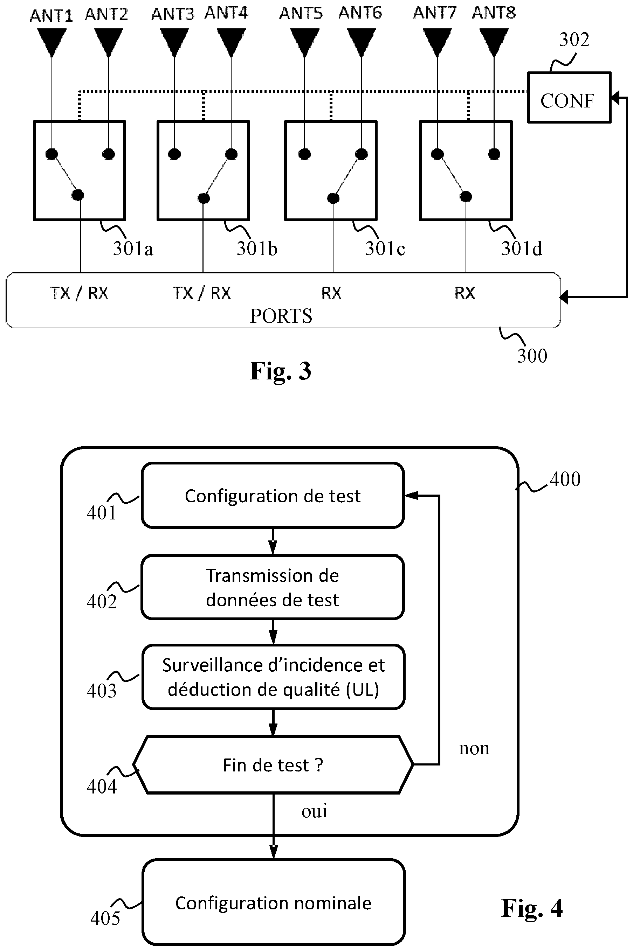

La Fig. 3 illustre schématiquement un agencement de l'interface de communication I1 121.

L'interface de communication I1 121 comporte une pluralité d'antennes utilisables en réception (grâce à un port de réception RX), de sorte à recevoir des signaux de communication en provenance de la station de base BS 101. L'interface de communication I1 121 comporte une pluralité d'antennes utilisables en émission (grâce à un port d'émission TX), de sorte à émettre des signaux de communication à destination de la station de base BS 101. Une ou plusieurs antennes peuvent être utilisées en émission et en réception (grâce à un port d'émission-réception TX / RX).

De manière illustrative, l'agencement de la Fig. 3 présente huit antennes ANT1 à ANT8. Les antennes sont associées par paires. Des commutateurs 301a à 301d permettent d'activer sélectivement, par configuration dynamique, une antenne pour chaque paire, et de désactiver l'autre antenne de la paire en question. Ainsi, les combinaisons d'antennes en émission rendues possibles par l'agencement de la Fig. 3 sont les suivantes : ANT1 + ANT3, ANT1 + ANT4, ANT2 + ANT3 et ANT2 + ANT4. Dans d'autres exemples l'interface de communication I1 121 comporte :
- 4 antennes et 2 commutateurs, ou
- 6 antennes et 3 commutateurs, ou
- etc.

La configuration dynamique des commutateurs 301a à 301d est réalisée par un configurateur CONF 302. Dans un exemple, le configurateur CONF 302 comprend, ou est apte à coopérer avec, un modem ou un contrôleur de bande de base (« baseband » en anglais) des couches physique et MAC compatibles avec des protocoles de communication cellulaire (par exemple 4G et/ou 5G).

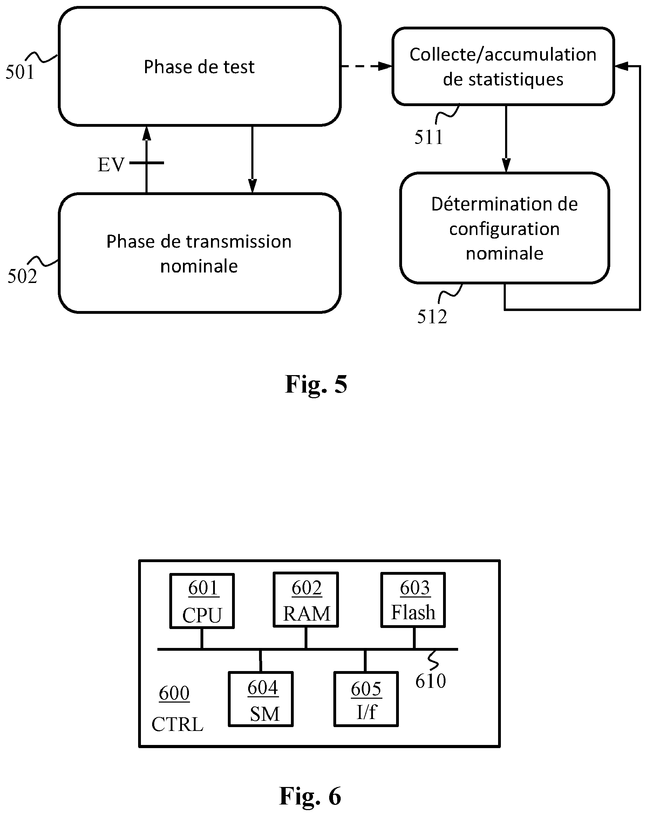

Le configurateur CONF 302 implémente une phase de test pour déterminer quelle combinaison d'antennes en émission utiliser en phase de transmission nominale (i.e., hors phase de test). Chacune des combinaisons d'antennes en émission possibles est alors testée. Et en surveillant quelle incidence a chaque combinaison d'antennes en émission sur des paramétrisations réalisées par la station de base BS 101 vis-à-vis de la passerelle résidentielle RGW 102 dans le réseau de communication cellulaire NET 103, cela permet d'en déduire une métrique de qualité de lien ascendant obtenue avec la combinaison d'antennes en émission en question. Et la combinaison d'antennes en émission qui a obtenu la meilleure métrique de qualité de lien ascendant en phase de test est alors utilisée en phase de transmission nominale. Cet aspect est détaillé ci-après en relation avec les Figs. 4 et 5.

La Fig. 4 illustre schématiquement un algorithme de configuration de l'interface de communication I1 121. L'algorithme de la Fig. 4 permet de mettre en place une phase de test 400 pendant laquelle différentes combinaisons d'antennes en émission sont testées.

Dans une étape 401, le configurateur CONF 302 sélectionne une combinaison d'antennes en émission à tester. Dans le cadre de la Fig. 3, le configurateur CONF 302 configure les commutateurs 301a à 301d de sorte à activer la combinaison d'antennes en émission qui est sélectionnée (i.e., combinaison d'antennes en émission à tester).

Dans une étape 402, le configurateur CONF 302 déclenche une émission de données de test à destination de la station de base BS 101. Les données de test peuvent être adressées à un serveur rendu accessible par le réseau de communication cellulaire NET 103 via la station de base BS 101.

Les données de test sont ainsi transmises par la passerelle résidentielle RGW 102 via son interface de communication I1 121 en utilisant la combinaison d'antennes en émission qui a été sélectionnée à l'étape 401.

Dans une étape 403, le configurateur CONF 302 surveille quelle incidence a la combinaison d'antennes en émission, qui est utilisée à l'étape 402, sur des paramétrisations réalisées par la station de base BS 101 vis-à-vis de la passerelle résidentielle RGW 102 dans le réseau de communication cellulaire NET 103. De cette incidence, le configurateur CONF 302 en déduit une métrique de qualité de lien ascendant obtenue avec la combinaison d'antennes en émission qui a été sélectionnée à l'étape 401.

Dans un mode de réalisation particulier, le configurateur CONF 302 interroge, par exemple toutes les 100 ms, l'interface de communication I1 121 (*e.g.,* un ensemble de composants (« chipset » en anglais) implémentant une couche physique compatible avec le réseau de communication cellulaire NET 103) afin de collecter à intervalle régulier une valeur instantanée d'un paramètre appelé « taille de bloc de transfert » (« Transfer Block Size » ou TB size, en anglais). La taille de bloc de transfert est un bon indicateur de la capacité à obtenir un débit satisfaisant en lien ascendant, qui correspond à la taille de blocs de données utiles (« payload data » en anglais) envoyés à la couche physique et qui définit l'usage du medium radio entre la passerelle résidentielle RGW 102 et la station de base BS 101. La taille de bloc de transfert résulte d'un calcul de couche physique, qui dépend des paramètres suivants imposés par la station de base BS 101 : nombre de couches (« layers » en anglais) MIMO (« Multiple Inputs - Multiple Outputs » en anglais), schéma de modulation et de codage, et nombre de blocs-ressources alloués en lien ascendant par la station de base BS 101 à la passerelle résidentielle RGW 102. La taille de bloc de transfert est donc révélatrice de l'incidence de la combinaison d'antennes en émission testée sur des paramétrisations réalisées par la station de base BS 101 vis-à-vis de la passerelle résidentielle RGW 102 dans le réseau de communication cellulaire NET 103. Le configurateur CONF 302 en déduit une métrique de qualité de lien ascendant obtenue avec la combinaison d'antennes en émission en question, en considérant que plus la taille de bloc de transfert est élevée, meilleure est la performance (qualité) du lien ascendant.

Dans un autre mode de réalisation particulier, le configurateur CONF 302 utilise le schéma de modulation et de codage MCS (« Modulation and Coding Scheme » en anglais) défini par la station de base BS 101 pour les transmissions de la passerelle résidentielle RGW 102 vers ladite station de base BS 101. La station de base BS 101 définit typiquement le schéma de modulation et de codage MCS à utiliser en lien ascendant, en fonction d'un taux d'erreur de bloc (BLER, « Block Error Rate » en anglais) des données reçues en provenance de la passerelle résidentielle RGW 102. Le schéma de modulation et de codage est donc révélateur de l'incidence de la combinaison d'antennes en émission testée sur des paramétrisations réalisées par la station de base BS 101 vis-à-vis de la passerelle résidentielle RGW 102 dans le réseau de communication cellulaire NET 103. Le configurateur CONF 302 en déduit une métrique de qualité de lien ascendant obtenue avec la combinaison d'antennes en émission en question, en considérant que plus le schéma de modulation et de codage MCS est robuste, moins bonne est la performance (qualité) du lien ascendant. Par exemple, les schémas de modulation et de codage MCS utilisables sont notés en index de valeur croissante suivant le nombre de bits qui peuvent être transportés par un seul symbole auquel est appliqué le schéma de modulation et de codage MCS en question. Ainsi, plus l'index est élevé, meilleure est la performance (qualité) du lien ascendant.

Dans un autre mode de réalisation particulier, outre le schéma de modulation et de codage MCS, le configurateur CONF 302 utilise le nombre de couches MIMO autorisé par la station de base BS 101 à la passerelle résidentielle RGW 102. Le nombre de couches MIMO correspond au nombre de flux (« streams » en anglais) différents que la passerelle résidentielle RGW 102 est autorisée à transmettre en lien ascendant par la station de base BS 101, typiquement en fonction de ce que permet la qualité du signal radio reçu de la passerelle résidentielle RGW 102. Le nombre de couches MIMO est donc aussi révélateur de l'incidence de la combinaison d'antennes en émission testée sur des paramétrisations réalisées par la station de base BS 101 vis-à-vis de la passerelle résidentielle RGW 102 dans le réseau de communication cellulaire NET 103. Le configurateur CONF 302 en déduit une métrique de qualité de lien ascendant obtenue avec la combinaison d'antennes en émission en question, en considérant que plus le nombre de couches MIMO est élevé, meilleure est la performance (qualité) du lien ascendant. Par exemple, le configurateur CONF 302 peut établir une métrique basée sur un produit de l'index du schéma de modulation et de codage MCS multiplié par le nombre de couches MIMO.

Dans un autre mode de réalisation particulier, le configurateur CONF 302 utilise une valeur de contrôle de puissance d'émission (TPC, « Transmit Power Control » en anglais), envoyée par la station de base BS 101 à la passerelle résidentielle RGW 102. La valeur de contrôle de puissance d'émission indique à la passerelle résidentielle RGW 102 comment ajuster la puissance d'émission, comme par exemple dans le contrôle de boucle fermé CLC (« Closed Loop Control » en anglais) en 4G ou 5G. Plus la puissance d'émission est basse, meilleure est la performance (qualité) du lien ascendant.

Dans un autre mode de réalisation particulier, le configurateur CONF 302 utilise une métrique dérivée de plusieurs métriques exposées ci-dessus, par exemple une métrique qui prend en compte l'index du schéma de modulation et de codage MCS, le nombre de couches MIMO et la valeur de contrôle de puissance d'émission.

Avantageusement, pour évacuer toute phase transitoire en début de transmission, le configurateur CONF 302 retient uniquement la meilleure métrique de qualité de lien ascendant obtenue par itération de phase de test pour chaque combinaison d'antennes en émission testée. Par exemple : la valeur maximale parmi les valeurs de taille de bloc de transfert collectées pour chaque combinaison d'antennes en émission testée, ou la valeur minimale parmi les valeurs de contrôle de puissance d'émission collectées pour chaque combinaison d'antennes en émission testée.

Avantageusement aussi, le configurateur CONF 302 réalise plusieurs itérations (par exemple, 10 à 20 itérations) de la phase de test, et calcule une métrique moyenne sur lesdites itérations, pour chaque combinaison d'antennes en émission testée, afin de lisser d'éventuelles variations d'environnement radio et d'occupation réseau.

Dans une étape 404, le configurateur CONF 302 vérifie s'il reste au moins une autre combinaison d'antennes en émission à tester pendant la phase de test 400 ; si tel est le cas, la phase de test 400 se poursuit, et l'étape 401 est réitérée en sélectionnant une nouvelle combinaison d'antennes en émission à tester. Toutes les combinaisons possibles d'antennes en émission peuvent ainsi être testées pendant la phase de test 400. Les tests de toutes les combinaisons possibles d'antennes en émission peuvent aussi être répartis sur plusieurs itérations de la phase de test 400.

Dans une étape 405, à l'issue de la phase de test 400, le configurateur CONF 302 sélectionne une configuration nominale parmi les configurations d'antennes en émission qui ont été testées. La configuration nominale est la configuration d'antennes en émission qui montre la meilleure métrique de qualité de lien ascendant parmi les configurations d'antennes en émission qui ont été testées, au vu de leur incidence sur les paramétrisations réalisées par la station de base BS 101 vis-à-vis de la passerelle résidentielle RGW 102 dans le réseau de communication cellulaire NET 103.

La configuration nominale est alors la configuration d'antennes en émission qui est utilisée en phase de transmission nominale, c'est-à-dire lorsque la passerelle résidentielle RGW 102 transmet à la station de base BS 101 des données autres que les données de test (i.e., hors phase de test).

La phase de test 400 peut être déclenchée par la passerelle résidentielle RGW 102 à différents moments :
- au démarrage de la passerelle résidentielle RGW 102 ;
- de manière périodique, par exemple entre une fois par heure et une fois par jour ;
- à une connexion/reconnexion au réseau de communication cellulaire NET 103 ;
- sur détection d'un déplacement de la passerelle résidentielle RGW 102, grâce à des mesures d'un accéléromètre monté solidaire de (*e.g.,* intégré à) ladite passerelle résidentielle RGW 102 ;
- sur détection d'une commande utilisateur, tel qu'un appui sur un bouton d'une interface homme-machine de la passerelle résidentielle RGW 102 ;
- ou d'une manière générale, sur détection de la survenue d'un événement prédéfini.

La Fig. 5 illustre schématiquement un algorithme de déclenchement régulier de la phase de test décrite ci-dessus en relation avec l'algorithme de la Fig. 4.

Après initialisation, la passerelle résidentielle RGW 102 déclenche une phase de test 501.

La phase de test 501 consiste à tester différentes combinaisons d'antennes en émission, comme expliqué ci-dessus en relation avec la Fig. 4. Les métriques utilisées peuvent être les mêmes que celles détaillées ci-dessus en relation avec la Fig. 4.

Une fois la phase de test 501 terminée, la passerelle résidentielle RGW 102 bascule en phase de transmission nominale. En émission, la passerelle résidentielle RGW 102 utilise une configuration nominale des antennes en émission. Cette configuration nominale des antennes en émission est obtenue grâce à des statistiques accumulées, dans une étape 511, lors d'itérations successives de la phase de test 501.

En effet, à chaque itération de la phase de test 501, la passerelle résidentielle RGW 102 enrichit des statistiques de qualité de lien ascendant, c'est-à-dire un historique d'au moins une métrique de qualité de lien ascendant obtenue pendant des itérations successives de la phase de test. Ainsi, sur détection de la survenue d'un événement prédéfini EV, la passerelle résidentielle RGW 102 déclenche une nouvelle itération de la phase de test 501, et les statistiques sont alors enrichies avec cette nouvelle itération de la phase de test 501. Cela peut mener, dans une étape 512, à une nouvelle définition de la configuration nominale des antennes en émission (par exemple, parce que la passerelle résidentielle RGW 102 a été déplacée).

Dans l'étape 512, la passerelle résidentielle RGW 102 détermine la configuration nominale (des antennes en émission), après avoir accumulé des statistiques sur une période T supérieure ou égale à un seuil prédéfini de durée TH1. Le seuil prédéfini de durée TH1 est préférentiellement égal à quelques jours glissants. Par exemple, TH1 est de 5 jours glissants. Préférentiellement, la passerelle résidentielle RGW 102 (le configurateur CONF 302) retire de l'historique les valeurs de métriques qui s'écartent de leur moyenne au-delà d'un seuil prédéfini de distance TH2. Par exemple, TH2 est égal à deux fois l'écart-type. Dans un mode de réalisation particulier, la passerelle résidentielle RGW 102 applique un filtre Gaussien sur l'historique. Ainsi, des métriques qui auraient été faussées, soit par un environnement radio éphémère (*e.g*., un objet métallique qui a été posé à proximité de la passerelle résidentielle RGW 102), soit par une baisse du nombre de ressources disponibles pour la passerelle résidentielle RGW 102 due à un trafic cellulaire important. Cette approche statistique est inhabituelle dans le domaine des réseaux de téléphonie cellulaire, qui sont spécifiquement conçus pour supporter des dispositifs terminaux particulièrement mobiles, alors que la passerelle résidentielle RGW 102 a vocation à rester longuement au même endroit.

La Fig. 6 illustre schématiquement un exemple d'agencement d'un contrôleur CTRL 600 intégrant au moins le configurateur CONF 302, et éventuellement d'autres fonctionnalités (*e.g.,* pile de communication, fonctionnalités applicatives...).

Le contrôleur CTRL 600 comporte, reliés par un bus de communication 610 : un processeur ou CPU (« Central Processing Unit » en anglais) 601 ; une mémoire vive RAM (« Random-Access Memory » en anglais) 602 ; une mémoire non volatile, par exemple de type EEPROM (« Electrically-Erasable Programmable Read Only Memory » en anglais) ou de type Flash 603 ; une unité de stockage, telle qu'un support de stockage SM 604, par exemple un disque dur HDD, ou un lecteur de support de stockage, tel qu'un lecteur de cartes SD (« Secure Digital » en anglais) ; et un gestionnaire d'interfaces I/f 605.

Le gestionnaire d'interfaces I/f 605 permet au configurateur CONF 302 d'interagir avec d'autres éléments de la passerelle résidentielle RGW 102, particulièrement les commutateurs 301a à 301d afin de configurer les antennes à utiliser en émission, que ce soit en phase de test ou en phase de transmission nominale.

Le processeur ou CPU 601 est capable d'exécuter des instructions chargées dans la mémoire vive 602, notamment à partir de la mémoire non volatile 603 ou du support de stockage (tel qu'une carte SD) 604. Lorsque le contrôleur CTRL 600 est mis sous tension, le processeur ou CPU 601 est ainsi capable de lire de la mémoire vive 602 des instructions et de les exécuter. Ces instructions forment un programme d'ordinateur causant notamment l'implémentation, par le processeur ou CPU 401, des étapes et comportements décrits ici en relation avec le configurateur CONF 302.

Tout ou partie des étapes et comportements décrits ici peut ainsi être implémenté sous forme logicielle par exécution d'un ensemble d'instructions par une machine programmable, par exemple un processeur de type DSP (« Digital Signal Processor » en anglais) ou un microcontrôleur, ou être implémenté sous forme matérielle par une machine ou un composant électronique (« chip » en anglais) dédié ou un ensemble de composants électroniques (« chipset » en anglais) dédié, par exemple un composant FPGA (« Field Programmable Gate Array » en anglais) ou ASIC (« Application Spécifie Integrated Circuit » en anglais). D'une manière générale, le configurateur CONF 302, et plus généralement le contrôleur CTRL 600 et la passerelle résidentielle RGW 102, comporte de la circuiterie électronique adaptée et configurée pour implémenter les étapes et comportements décrits ici.

## Revendications

1. Procédé de transmission de données depuis un dispositif terminal (102) sur un lien ascendant vers une station de base (101) d'un réseau de communication cellulaire (103), le dispositif terminal (102) comportant une pluralité d'antennes en émission (ANT1, ANT2, ANT3, ANT4) dont une combinaison est sélectionnée pour effectuer la transmission de données depuis le dispositif terminal (102) vers la station de base (101), le procédé étant exécuté par le dispositif terminal (102),
le procédé comportant, en phase de test (400, 501), pour chaque combinaison d'antennes en émission possible :
- émettre (402) des données de test à destination de la station de base (101) en activant (401) la combinaison d'antennes en émission en question, et ;
- surveiller (403) quelle incidence a la combinaison d'antennes en émission en question sur des paramétrisations réalisées par la station de base (101) vis-à-vis du dispositif terminal (102) dans le réseau de communication cellulaire (103), et en déduire une métrique de qualité de lien ascendant obtenue avec la combinaison d'antennes en émission en question, et le procédé comportant en outre, en phase de transmission nominale (502) :
- effectuer la transmission de données en activant (405) la combinaison d'antennes en émission qui a obtenu la meilleure métrique de qualité de lien ascendant en phase de test ;
**caractérisé en ce que** l'incidence sur les paramétrisations réalisées par la station de base (101) est surveillée en collectant à intervalle régulier une valeur instantanée de taille de bloc de transfert auprès d'une couche physique d'une interface de communication (121) du dispositif terminal (102) avec le réseau de communication cellulaire (103), et **en ce que** la métrique est telle que plus la taille de bloc de transfert est élevée, meilleure est la qualité de lien ascendant.

2. Procédé selon la revendication 1, dans lequel l'incidence sur les paramétrisations réalisées par la station de base (101) est surveillée (403) en utilisant en outre le schéma de modulation et de codage défini par la station de base (101) pour le dispositif terminal (102), et où la métrique est telle que plus le schéma de modulation et de codage est robuste, moins bonne est la qualité de lien ascendant.

3. Procédé selon l'une quelconque des revendications 1 et 2, dans lequel l'incidence sur les paramétrisations réalisées par la station de base (101) est surveillée (403) en utilisant en outre un nombre de couches MIMO autorisé par la station de base (101), et où la métrique est telle que plus le nombre de couches MIMO est élevé, meilleure est la qualité de lien ascendant.

4. Procédé selon l'une quelconque des revendications 1 à 3, dans lequel l'incidence sur les paramétrisations réalisées par la station de base (101) est surveillée (403) en utilisant en outre une valeur de contrôle de puissance d'émission envoyée par la station de base (101) au dispositif terminal (102), et où la métrique est telle que plus la puissance d'émission est basse, meilleure est la qualité du lien ascendant.

5. Procédé selon l'une quelconque des revendications 1 à 4, comportant :
- retenir uniquement la meilleure métrique de qualité de lien ascendant obtenue par itération de phase de test pour chaque combinaison d'antennes en émission testée.

6. Procédé selon l'une quelconque des revendications 1 à 5, comportant :
- réaliser plusieurs itérations de phase de test, et calculer une métrique moyenne sur lesdites itérations, pour chaque combinaison d'antennes en émission testée.

7. Procédé selon l'une quelconque des revendications 1 à 6, comportant :
- accumuler (511) des statistiques sur une période T supérieure ou égale à un seuil prédéfini de durée TH1, sous forme d'un historique d'au moins une métrique de qualité de lien ascendant obtenue pendant des itérations successives de la phase de test ;
- retirer de l'historique les valeurs de métriques qui s'écartent de leur moyenne au-delà d'un seuil prédéfini de distance TH2.

8. Procédé selon la revendication 7, dans lequel le seuil prédéfini de distance TH2 est égal à deux fois l'écart-type.

9. Procédé selon la revendication 7 ou 8, dans lequel le seuil prédéfini de durée TH1 est égal à quelques jours glissants.

10. Procédé selon l'une quelconque des revendications 1 à 9, dans lequel la phase de test est déclenchée sur détection d'un déplacement du dispositif terminal (102) grâce à des mesures d'un accéléromètre monté solidaire au dispositif terminal (102).

11. Procédé selon l'une quelconque des revendications 1 à 10, dans lequel le dispositif terminal (102) est une passerelle résidentielle.

12. Dispositif terminal (102) configuré pour réaliser une transmission de données sur un lien ascendant vers une station de base (101) d'un réseau de communication cellulaire (103), le dispositif terminal (102) comportant une pluralité d'antennes en émission (ANT1, ANT2, ANT3, ANT4) dont une combinaison est sélectionnée pour effectuer la transmission de données depuis le dispositif terminal (102) vers la station de base (101),
le dispositif terminal (102) comportant de la circuiterie électronique configurée pour, en phase de test, pour chaque combinaison d'antennes en émission possible :
- émettre (402) des données de test à destination de la station de base en activant (401) la combinaison d'antennes en émission en question, et ;
- surveiller (403) quelle incidence a la combinaison d'antennes en émission en question sur des paramétrisations réalisées par la station de base (101) vis-à-vis du dispositif terminal (102) dans le réseau de communication cellulaire (103), et en déduire une métrique de qualité de lien ascendant obtenue avec la combinaison d'antennes en émission en question, et la circuiterie électronique étant en outre configurée pour, en phase de transmission nominale :
- effectuer la transmission de données en activant (405) la combinaison d'antennes en émission qui a obtenu la meilleure métrique de qualité de lien ascendant en phase de test ;
**caractérisé en ce que** la circuiterie électronique est configurée pour que l'incidence sur les paramétrisations réalisées par la station de base (101) soit surveillée en collectant à intervalle régulier une valeur instantanée de taille de bloc de transfert auprès d'une couche physique d'une interface de communication (121) du dispositif terminal (102) avec le réseau de communication cellulaire (103), la métrique étant telle que plus la taille de bloc de transfert est élevée, meilleure est la qualité de lien ascendant.

13. Produit programme d'ordinateur comportant des instructions de code de programme causant une implémentation du procédé selon l'une quelconque des revendications 1 à 11, lorsque lesdites instructions sont exécutées par un processeur de dispositif terminal selon la revendication 12.

14. Support de stockage d'informations stockant des instructions de code de programme causant une implémentation du procédé selon l'une quelconque des revendications 1 à 11, lorsque lesdites instructions sont lues et exécutées par un processeur de dispositif terminal selon la revendication 12.
